(19) Europäisches Patentamt
European Patent Office
Office européen des brevets

(11) **EP 3 783 402 A1**

(12) **EUROPEAN PATENT APPLICATION**
published in accordance with Art. 153(4) EPC

(43) Date of publication:
**24.02.2021 Bulletin 2021/08**

(51) Int Cl.:
**G02B 5/30** (2006.01)    **G02B 5/02** (2006.01)
**G03B 21/60** (2014.01)

(21) Application number: **19788074.3**

(22) Date of filing: **03.04.2019**

(86) International application number:
**PCT/JP2019/014787**

(87) International publication number:
**WO 2019/202989 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2018 JP 2018078799**

(71) Applicant: **Nitto Denko Corporation**
**Ibaraki-shi, Osaka 567-8680 (JP)**

(72) Inventors:
• **YAEGASHI Masahiro**
  **Ibaraki-shi, Osaka 567-8680 (JP)**
• **KISHI Atsushi**
  **Ibaraki-shi, Osaka 567-8680 (JP)**
• **NAKAMURA Kozo**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **PROJECTION SCREEN OPTICAL LAMINATE AND PROJECTION SCREEN USING OPTICAL LAMINATE**

(57)    There is provided a projection screen optical laminate, which can achieve a projection screen that does not impair an interior appearance, can be produced at reasonable cost, and can achieve a projected image that achieves both of excellent contrast and an excellent viewing angle characteristic. A projection screen optical laminate according to an embodiment of the present invention includes: a polarizer; a high-haze layer; and a retardation layer. The high-haze layer has a haze of 90% or more, and a total light transmittance of 80% ormore, and the retardation layer has an in-plane retardation Re(550) of from 100 nm to 200 nm.

FIG. 1

EP 3 783 402 A1

## Description

Technical Field

The present invention relates to a projection screen optical laminate and a proj ection screen using the optical laminate .

Background Art

An image projected by a projector is generally dark as compared to an image displayed by an image display apparatus, and hence is liable to be affected by ambient light. Therefore, an adjustment to a projection environment, such as darkening of a room, is required. As a matter of course, there is a demand for a projector capable of clearly displaying a projected image even under a bright environment. From such viewpoint, an investigation has been made on a technology including using polarized light as light output from a projector and using a polarizing element (polarizing plate) in a screen on which an image from the projector is projected (e.g., Patent Literatures 1 to 5). However, the technologies of Patent Literatures 1 to 3 each involve a problem in that the screen blackens to impair an interior appearance. The technologies of Patent Literatures 3 to 5 each include using a cholesteric liquid crystal material. However, such material is extremely expensive and its production process is complicated, and hence its practical use is hardly tolerable. Further, the technologies each involve a problem in that it is difficult to achieve both of contrast and a viewing angle characteristic.

Citation List

Patent Literature

[PTL 1] JP 05-134214 A
[PTL 2] JP 06-138429 A
[PTL 3] JP 2004-198649 A
[PTL 4] JP 2009-223012 A
[PTL 5] JP 2017-015897 A

Summary of Invention

Technical Problem

The present invention has been made to solve the conventional problems, and an object of the present invention is to provide a projection screen optical laminate, which can achieve a projection screen that does not impair an interior appearance, can be produced at reasonable cost, and can achieve a projected image that achieves both of excellent contrast and an excellent viewing angle characteristic.

Solution to Problem

According to an embodiment of the present invention, there is provided a projection screen optical laminate. The projection screen optical laminate includes: a polarizer; a high-haze layer; and a retardation layer. The high-haze layer has a haze of 90% or more, and a total light transmittance of 80% or more, and the retardation layer has an in-plane retardation Re (550) of from 100 nm to 200 nm.
In one embodiment of the present invention, the polarizer is an absorptive polarizer.
In one embodiment of the present invention, the projection screen optical laminate includes the high-haze layer, the absorptive polarizer, and the retardation layer in the stated order toward a viewer side thereof.
In one embodiment of the present invention, the projection screen optical laminate further includes a reflective layer on a side of the high-haze layer opposite to the absorptive polarizer.
In one embodiment of the present invention, the polarizer is a reflective polarizer.
In one embodiment of the present invention, the projection screen optical laminate includes the reflective polarizer, the high-haze layer, and the retardation layer in the stated order toward a viewer side thereof.
In one embodiment of the present invention, the projection screen optical laminate further includes a light-absorbing layer on a side of the reflective polarizer opposite to the high-haze layer.

In one embodiment of the present invention, the high-haze layer has a matrix and light-diffusible fine particles dispersed in the matrix, and has a refractive index modulation region in which a refractive index changes in a substantially continuous manner, the region being formed at an interface between the matrix and the light-diffusible fine particles, or in a vicinity thereof.

In one embodiment of the present invention, the matrix contains a resin component and ultrafine particle components, and the refractive index modulation region is formed by a substantial gradient of a dispersion concentration of the ultrafine particle components in the matrix.

In one embodiment of the present invention, the projection screen optical laminate is used as a projection screen.

According to another aspect of the present invention, there is provided a projection screen. The projection screen includes: a screen main body; and the above-described proj ection screen optical laminate bonded to a projection surface side of the screen main body.

Advantageous Effects of Invention

According to the embodiment of the present invention, the high-haze layer that achieves both of a high haze and a high light transmittance, and the specific retardation layer are adopted in combination, and hence there can be obtained the proj ection screen optical laminate, which can achieve a projection screen that does not impair an interior appearance, can be produced at reasonable cost, and can achieve a projected image that achieves both of excellent contrast and an excellent viewing angle characteristic.

Brief Description of Drawings

FIG. 1 is a schematic sectional view of a projection screen optical laminate according to one embodiment of the present invention.

FIG. 2 is a schematic sectional view of a projection screen optical laminate according to another embodiment of the present invention.

FIG. 3 is a schematic sectional view of a projection screen optical laminate according to still another embodiment of the present invention.

FIG. 4 is a schematic sectional view of a projection screen optical laminate according to still another embodiment of the present invention.

FIG. 5 is a schematic sectional view of a projection screen optical laminate according to still another embodiment of the present invention.

FIG. 6 is a schematic perspective view of an example of a reflective polarizer that maybe used in the proj ection screen optical laminate according to the embodiment of the present invention.

FIG. 7 is a schematic view of a brightness-measuring system when viewed from above, for illustrating brightness measurement in each of Examples and Comparative Examples.

Description of Embodiments

Embodiments of the present invention are described below. However, the present invention is not limited to these embodiments.

A. Overall Configuration of Projection Screen Optical Laminate

A projection screen optical laminate according to an embodiment of the present invention includes a polarizer, a high-haze layer, and a retardation layer. The polarizer may be an absorptive polarizer, or may be a reflective polarizer. A typical example of a specific configuration is described below.

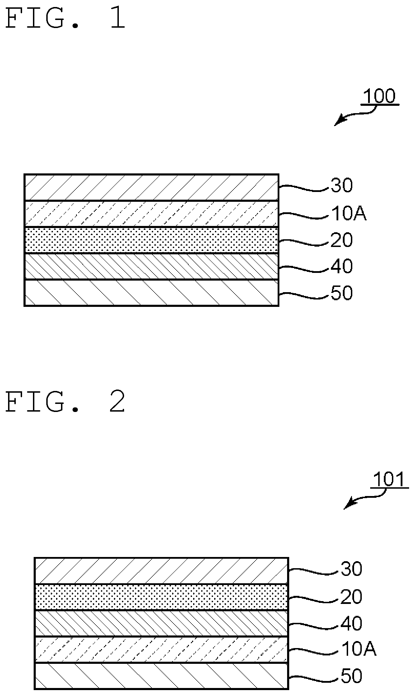

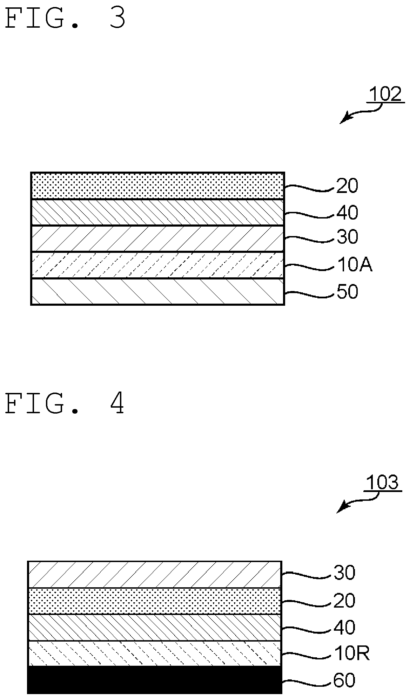

FIG. **1** is a schematic sectional view of a projection screen optical laminate according to one embodiment of the present invention, FIG. **2** is a schematic sectional view of a projection screen optical laminate according to another embodiment of the present invention, and FIG. **3** is a schematic sectional view of a projection screen optical laminate according to still another embodiment of the present invention. Those embodiments are embodiments in each of which an absorptive polarizer is adopted as a polarizer. A projection screen optical laminate **100** of FIG. **1** includes a high-haze layer **20,** an absorptive polarizer **10A,** and a retardation layer **30** in the stated order toward its viewer side. A projection screen optical laminate **101** of FIG. **2** includes the absorptive polarizer **10A,** the high-haze layer **20,** and the retardation layer **30** in the stated order toward its viewer side. A projection screen optical laminate **102** of FIG. **3** includes the absorptive polarizer **10A,** the retardation layer **30,** and the high-haze layer **20** in the stated order toward its viewer side. In each of the illustrated examples, a substrate layer **40** is arranged on the side of the high-haze layer **20** opposite to the viewer side. This is because the high-haze layer **20** is formed on a substrate (that may serve as the substrate layer **40)** through application as described later. The substrate layer **40** may be arranged on the viewer side of the high-haze layer **20,** or may be omitted in accordance with, for example, purposes and desired characteristics of a projection screen. For example, the substrate layer **40** may be omitted by transferring the high-haze layer **20** from a laminate of the high-haze layer and the substrate onto the absorptive polarizer **10A** or the retardation layer **30.** Further, in each of the illustrated examples, a reflective layer **50** is arranged as an outermost layer on the side opposite to the viewer side. The reflective layer **50** may be omitted in accordance with, for example, the purposes and the desired characteristics of the proj ection screen. In addition, a protective film (not shown) may be arranged on one side, or each of both sides, of the absorptive polarizer **10A** as required.

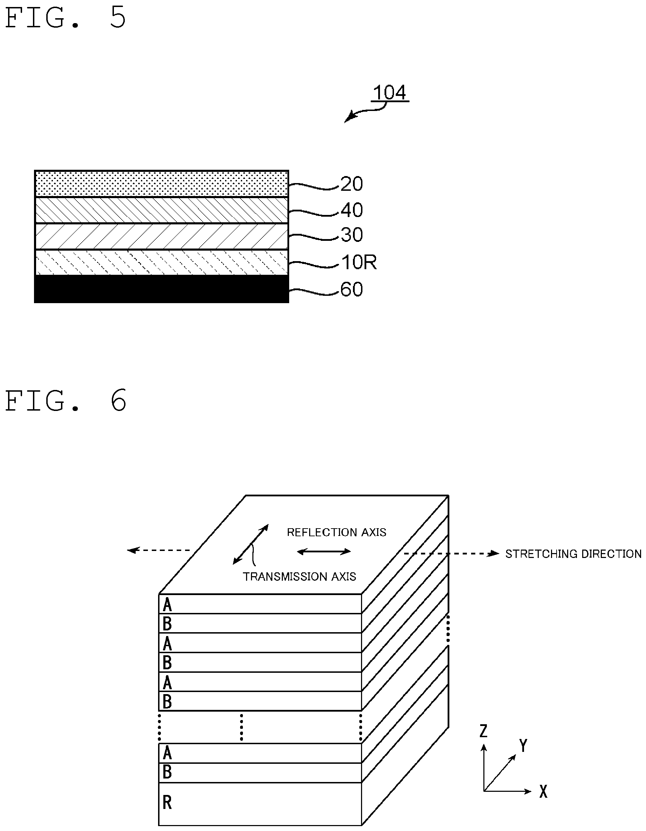

FIG. **4** is a schematic sectional view of a projection screen optical laminate according to still another embodiment of the present invention, and FIG. **5** is a schematic sectional view of a projection screen optical laminate according to still another embodiment of the present invention. Those embodiments are embodiments in each of which a reflective polarizer is adopted as a polarizer. A projection screen optical laminate **103** of FIG. **4** includes a reflective polarizer **10R,** the high-haze layer **20,** and the retardation layer **30** in the stated order toward its viewer side. A projection screen optical laminate **104** of FIG. **5** includes the reflective polarizer **10R,** the retardation layer **30,** and the high-haze layer **20** in the stated order toward its viewer side. In each of the illustrated examples, as in the cases of FIG. **1** to FIG **3,** the substrate layer **40** is arranged on the side of the high-haze layer **20** opposite to the viewer side. As in the cases of FIG. **1** to FIG **3,** the substrate layer **40** may be arranged on the viewer side of the high-haze layer **20,** or may be omitted. Further, in each of the illustrated examples, a light-absorbing layer **60** is arranged as an outermost layer on the side opposite to the viewer side. The light-absorbing layer **60** may be omitted in accordance with, for example, the purposes and the desired characteristics of the projection screen.

In the embodiment of the present invention, the high-haze layer **20** has a haze of 90% or more, and a total light transmittance of 80% or more. A detailed configuration of the high-haze layer is described in the section D to be described later. When such a configuration as described in the section D is adopted, both of a high haze and a high total light transmittance can be achieved, and incidentally, the depolarization degree and backscattering ratio of the high-haze layer can be reduced. Therefore, the high-haze layer **20** preferably has a depolarization degree of 0.20% or less, and/or a backscattering ratio of 0.70% or less. The arrangement of the high-haze layer having such characteristics in the projection screen optical laminate can provide the following advantages peculiar to a projection screen: (1) the haze is extremely high, and hence the screen can be suppressed from blackening even when an absorptive polarizer is used, and as a result, an interior appearance can be satisfactorily maintained; (2) the layer has a high haze and high light-diffusing performance, and hence the viewing angle of the screen can be widened, and as a result, the screen can be applied even to a short focus proj ector; (3) the depolarization degree is low, and hence high contrast can be maintained even when a reflective polarizer is used; and (4) the backscattering ratio is low, and hence a projected image can be prevented from becoming opaque despite the fact that the haze is high.

In the embodiment of the present invention, the retardation layer **30** has an in-plane retardation Re(550) of from 100 nm to 200 nm. The arrangement of such retardation layer can impart a circular polarization function or an elliptical polarization function to the projection screen optical laminate. As a result, when polarized light is used as light output from a projector (that is, when a polarizing plate is arranged on the output side of the projector), a projector-projected image having high contrast can be achieved even under a bright environment. Further, when the circular polarization function or the elliptical polarization function is imparted to the projection screen optical laminate, precise adjustment of an angle between the absorption axis direction of the polarizer of the polarizing plate to be arranged in the projector, and the absorption axis direction or reflection axis direction of the polarizer of the projection screen optical laminate is not required. For example, when perfect circularly polarized light can be achieved in each of the polarizing plate of the projector and the projection screen optical laminate, such angle adjustment itself is not required.

B. Absorptive Polarizer

The absorptive polarizer (hereinafter sometimes simply referred to as "polarizer") **10A** is typically a resin film having adsorbed and aligned thereon a dichroic substance (e.g., iodine). For example, the resin film for forming the absorptive polarizer may be a single-layer resin film, or may be a laminate of two or more layers.

Specific examples of the absorptive polarizer formed of a single-layer resin film include: a polarizer obtained by subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, and stretching treatment; and a polyene-based alignment film, such as a dehydration-treated product of PVA or a dehydrochlorination-treated product of polyvinyl chloride. A polarizer obtained by dyeing the PVA-based film with iodine and uniaxially stretching the resultant is preferably used because the polarizer is excellent in optical characteristics.

The dyeing with iodine is performed by, for example, immersing the PVA-based film in an aqueous solution of iodine. The stretching ratio of the uniaxial stretching is preferably from 3 times to 7 times. The stretching may be performed after the dyeing treatment, or may be performed while the dyeing is performed. In addition, the dyeing may be performed after the stretching has been performed. The PVA-based film is subjected to swelling treatment, cross-linking treatment, washing treatment, drying treatment, or the like as required. For example, when the PVA-based film is immersed in water to be washed with water before the dyeing, contamination or an antiblocking agent on the surface of the PVA-based film can be washed off. In addition, the PVA-based film is swollen and hence dyeing unevenness or the like can be prevented.

A specific example of the absorptive polarizer obtained by using a laminate is a polarizer obtained by using a laminate of a resin substrate and a PVA-based resin layer (PVA-based resin film) laminated on the resin substrate or a laminate of a resin substrate and a PVA-based resin layer formed on the resin substrate through application. The polarizer obtained by using the laminate of the resin substrate and the PVA-based resin layer formed on the resin substrate through application may be produced, for example, by: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the polarizer. In this embodiment, the stretching typically includes stretching of the laminate under a state in which the laminate is immersed in an aqueous solution of boric acid. Further, the stretching may further include in-air stretching of the laminate at high temperature (e.g., 95°C or more) before the stretching in the aqueous solution of boric acid as required. The resultant laminate of the resin substrate and the polarizer may be used as it is (i.e., the resin substrate may be used as a protective layer for the polarizer). Alternatively, a product obtained as described below may be used: the resin substrate is peeled from the laminate of the resin substrate and the polarizer, and any appropriate protective layer in accordance with purposes is laminated on the peeling surface. Details of such method of producing the polarizer are described in, for example, JP 2012-73580 A, the description of which is incorporated herein by reference in its entirety.

The absorptive polarizer preferably shows absorption dichroism at any wavelength in the wavelength range of from 380 nm to 780 nm. The single layer transmittance of the absorptive polarizer is preferably from 42.0% to 46.0%, more preferably from 42.5% to 45.0%. The polarization degree of the absorptive polarizer is preferably 97.0% or more, more preferably 99.0% or more, still more preferably 99.9% or more.

The thickness of the absorptive polarizer may be, for example, from 1 $\mu$m to 80 $\mu$m.

C. Reflective Polarizer

The reflective polarizer **10R** has a function of transmitting polarized light in a specific polarization state (polarization direction) and reflecting light in a polarization state except the foregoing. The reflective polarizer may be of a linearly polarized light separation type, or may be of a circularly polarized light separation type. A linearly polarized light separation-type reflective polarizer is simply described below as an example. A circularly polarized light separation-type reflective polarizer is, for example, a laminate of a film obtained by fixing a cholesteric liquid crystal and a $\lambda$/4 plate.

FIG. **6** is a schematic perspective view of an example of the reflective polarizer. The reflective polarizer is a multilayer laminate in which a layer A having a birefringent property and a layer B substantially free of any birefringent property are alternately laminated. The total number of the layers of such multilayer laminate may be, for example, from 50 to 1,000. In the illustrated example, the refractive index nx of the layer A in an x-axis direction is larger than the refractive index ny thereof in a y-axis direction, and the refractive index nx of the layer B in the x-axis direction and the refractive index ny thereof in the y-axis direction are substantially equal to each other. Therefore, a difference in refractive index between the layer A and the layer B is large in the x-axis direction, and is substantially zero in the y-axis direction. As a result, the x-axis direction serves as a reflection axis, and the y-axis direction serves as a transmission axis. The difference in refractive index between the layer A and the layer B in the x-axis direction is preferably from 0.2 to 0.3. The x-axis direction corresponds to the stretching direction of the reflective polarizer in a method of producing the reflective polarizer. In addition, the reflective polarizer may include a reflective layer R as an outermost layer like the illustrated example.

The layer A preferably includes a material that expresses a birefringent property when stretched. Typical examples of such material include naphthalenedicarboxylic acid polyester (e.g., polyethylene naphthalate), polycarbonate, and an acrylic resin (e.g., polymethyl methacrylate). Of those, polyethylene naphthalate is preferred. The layer B preferably includes a material that is substantially free from expressing a birefringent property even when stretched. Such material is typically, for example, a copolyester of naphthalenedicarboxylic acid and terephthalic acid.

A polarizer described in, for example, JP 09-507308 A may be used as the reflective polarizer. In addition, a commercial product may be used as it is as the reflective polarizer, or the commercial product subjected to secondary processing (e.g., stretching) maybe used. Examples of the commercial product include a product available under the product name "DBEF" from 3M Company, and a product available under the product name "APF" from 3M Company.

D. High-haze Layer

The haze of the high-haze layer **20** is 90% or more as described above, and is preferably 92% or more, more preferably 94% or more, still more preferably 96% or more. The upper limit of the haze is ideally 100%, and may be, for example, 99.9%. When the haze falls within such ranges, the screen can be suppressed from blackening even when an absorptive polarizer is used, and as a result, the interior appearance can besatisfactorily maintained. Further, the viewing angle of the screen can be widened, and as a result, the screen can be applied even to a short focus projector.

The total light transmittance of the high-haze layer is 80% or more as described above, and is preferably 84% or more, more preferably 86% or more, still more preferably 88% or more. The upper limit of the total light transmittance may be, for example, 95%. The high-haze layer to be used in the embodiment of the present invention can achieve both of such high total light transmittance and such extremely high haze as described above. As a result, a projected image having high contract can be achieved while the interior appearance is satisfactorily maintained.

The depolarization degree of the high-haze layer is preferably 0.20% or less as described above, and is more preferably 0.15% or less, still more preferably 0.10% or less. The lower limit of the depolarization degree may be, for example, 0.01%. In the case where the depolarization degree falls within such ranges, high contrast can be maintained even when a reflective polarizer is used.

The backscattering ratio of the high-haze layer is preferably 0.70% or less as described above, and is more preferably 0.50% or less, still more preferably 0.30% or less. The lower limit of the backscattering ratio may be, for example, 0.02%. When the backscattering ratio falls within such ranges, a projected image can be prevented from becoming opaque despite the fact that the haze is high.

The light diffusion half-value angle of the high-haze layer is preferably from 50° to 150° (from 25° to 75° on one side), more preferably from 60° to 140° (from 30° to 70° on one side), still more preferably from 70° to 120° (from 35° to 60° on one side) . When the light diffusion half-value angle is excessively small, the oblique viewing angle of the screen may narrow. When the light diffusion half-value angle is excessively large, backscattering may become larger.

The thickness of the high-haze layer is preferably from 4 $\mu$m to 20 $\mu$m, more preferably from 4 $\mu$m to 15 $\mu$m, still more preferably from 4 $\mu$m to 11 $\mu$m. With such extremely small thickness, the layer does not break even when bent, and as a result, the optical laminate can be stored in a roll shape. Therefore, such extremely thin high-haze layer may be extremely suitably used in an optical laminate to be bonded to a projection screen that is typically stored in a roll shape. In addition, as described later, the high-haze layer may be formed through application, and hence its productivity is markedly excellent and the working efficiency of its bonding to any other optical member is extremely high.

The high-haze layer typically has a matrix and light-diffusible fine particles dispersed in the matrix, and has a refractive index modulation region in which a refractive index changes in a substantially continuous manner, the region being formed at an interface between the matrix and the light-diffusible fine particles, or in a vicinity thereof. With such configuration, a high-haze layer capable of satisfying all of such characteristics as described above can be achieved. It is preferred that the matrix contain a resin component and ultrafine particle components, and the refractive index modulation region be formed by a substantial gradient of the dispersion concentration of the ultrafine particle components in the matrix.

The resin component of the matrix preferably includes an organic compound, and more preferably includes an ionizing radiation-curable resin. Examples of the ionizing radiation include UV light, visible light, an infrared ray, and an electron beam. Of those, UV light is preferred. Therefore, the resin component particularly preferably includes a UV-curable resin. The resin component may contain another resin component in addition to the ionizing radiation-curable resin. The other resin component may be an ionizing radiation-curable resin, may be a thermosetting resin, or may be a thermoplastic resin. When the other resin component is used, its kind and compounding amount are adjusted so that the refractive index modulation region may be satisfactorily formed. The resin component typically satisfies the following formula (1):

$$|n_P - n_A| < |n_P - n_B| \cdots (1)$$

in the formula (1), $n_A$ represents the refractive index of the resin component of the matrix, $n_B$ represents the refractive index of each of the ultrafine particle components of the matrix, and $n_P$ represents the refractive index of each of the light-diffusible fine particles.

Further, the resin component may satisfy the following formula (2) .

$$|n_P-n_A|<|n_A-n_B| \cdot \cdot \cdot (2)$$

The refractive index of the resin component is preferably from 1.40 to 1.60.

The ultrafine particle components of the matrix each preferably include an inorganic compound. The inorganic compound is preferably, for example, a metal oxide or a metal fluoride. Specific examples of the metal oxide include zirconium oxide (zirconia), aluminum oxide, titanium oxide, and silicon oxide. Specific examples of the metal fluoride include magnesium fluoride and calcium fluoride. Each of those metal oxides and metal fluorides absorbs a small quantity of light, and has a refractive index that is hardly expressed by an organic compound. Accordingly, as any such compound departs from its interface with the light-diffusible fine particles, the weight concentration of the ultrafine particle components becomes relatively higher, and hence the refractive index can be largely modulated. In the case where a difference in refractive index between the light-diffusible fine particles and the matrix is made larger, the high-haze layer can achieve strong diffusion even when the layer is a thin film. In addition, the refractive index modulation region is formed, and hence a large backscattering-preventing effect is obtained. The ultrafine particle components may also satisfy the formulae (1) and (2).

The average primary particle diameter of the ultrafine particle components is preferably from 1 nm to 100 nm, more preferably from 1 nm to 50 nm. The ultrafine particle components may secondarily aggregate, and their average particle diameter (average particle diameter of the aggregate) in that case is preferably from 10 nm to 100 nm, more preferably from 10 nm to 80 nm. When the ultrafine particle components having an average particle diameter smaller than the wavelength of light are used, no geometrical-optical reflection, refraction, or scattering occurs between the ultrafine particle components and the resin component, and hence an optically uniform matrix can be obtained.

The light-diffusible fine particles each include a compound similar to that of the resin component of the matrix. For example, when the ionizing radiation-curable resin for forming the resin component of the matrix is an acrylate-based resin, the light-diffusible fine particles each also preferably include an acrylate-based resin. The average particle diameter of the light-diffusible fine particles is preferably from 1.0 $\mu$m to 5.0 $\mu$m, more preferably from 1.0 $\mu$m to 4.0 $\mu$m. The light-diffusible fine particles may also satisfy the formulae (1) and (2).

The high-haze layer **20** maybe formed by a method including the steps of: applying an application liquid, which is obtained by dissolving or dispersing the resin component of the matrix or a precursor thereof, the ultrafine particle components, and the light-diffusible fine particles in a volatile solvent, to a substrate; drying the application liquid applied to the substrate; and polymerizing the precursor as required. Specific examples of the substrate include a triacetyl cellulose (TAC) film, a polyethylene terephthalate (PET) film, a polypropylene (PP) film, a nylon film, an acrylic film, and a lactone-modified acrylic film.

A laminate of the substrate and the high-haze layer may be used as it is . In this case, the substrate may serve as the substrate layer **40** in the projection screen optical laminate. Alternatively, the high-haze layer may be transferred from the laminate of the substrate and the high-haze layer onto the absorptive polarizer, the reflective polarizer, or the retardation layer. In this case, the substrate layer may be omitted in the projection screen optical laminate.

The high-haze layer is described in detail as a light-diffusing element or a light-diffusing film in, for example, JP 2012-088692 A, JP 2012-083741 A, JP 2012-083742 A, and JP 2012-083744 A, the descriptions of which are incorporated herein by reference.

E. Retardation Layer

The in-plane retardation Re (550) of the retardation layer 30 is from 100 nm to 200 nm as described above, and is preferably from 120 nm to 180 nm, more preferably from 130 nm to 160 nm.

The retardation layer preferably shows a refractive index characteristic of nx>ny≥nz. Therefore, the retardation layer has a slow axis. An angle formed by the absorption axis of the absorptive polarizer **10A** or the reflection axis of the reflective polarizer **10R** and the slow axis of the retardation layer **30** is preferably from 38° to 52°, more preferably from 42° to 48°, still more preferably about 45°. When an angle is mentioned herein, the angle comprehends both of clockwise and counterclockwise angles with respect to a reference direction. In addition, the equation "ny=nz" as used herein comprehends not only a case in which the ny and the nz are completely equal to each other but also a case in which the ny and the nz are substantially equal to each other. Therefore, the ny may be smaller than the nz to the extent that the effect of the present invention is not impaired.

The Nz coefficient of the retardation layer is preferably from 0.9 to 2.5, more preferably from 0.9 to 1.5, still more preferably from 0.9 to 1.3. The Nz coefficient is determined from the equation "Nz=Rth/Re" . The symbol "Re ($\lambda$) "

as used herein refers to an in-plane retardation measured at 23°C with light having a wavelength of $\lambda$ nm. For example, the symbol "Re(550)" refers to an in-plane retardation measured at 23°C with light having a wavelength of 550 nm. The Re($\lambda$) is determined from the equation "Re($\lambda$)=(nx-ny)×d" when the thickness of a layer (film) is represented by d (nm). The symbol "Rth ($\lambda$) " refers to a thickness direction retardation measured at 23°C with light having a wavelength of $\lambda$ nm. For example, the symbol "Rth (550)" refers to a thickness direction retardation measured at 23 °C with light having a wavelength of 550 nm. The Rth ($\lambda$) is determined from the equation "Rth($\lambda$)=(nx-nz)×d" when the thickness of a layer (film) is represented by d (nm). The symbol "nx" refers to a refractive index in a direction in which an in-plane refractive index is maximum (that is, slow axis direction), the symbol "ny" refers to a refractive index in a direction perpendicular to the slow axis in the plane (that is, fast axis direction), and the symbol "nz" refers to a refractive index in a thickness direction.

The retardation layer may show such a reverse wavelength dispersion characteristic that its retardation value increases with an increase in wavelength of measurement light, may show such a positive wavelength dispersion characteristic that the retardation value reduces with an increase in wavelength of the measurement light, or may show such a flat wavelength dispersion characteristic that the retardation value remains substantially unchanged even when the wavelength of the measurement light is changed. When the retardation layer shows the reverse wavelength dispersion characteristic, a ratio Re(450)/Re(550) is preferably 0.85 or more and less than 1.00, more preferably 0.95 or more and less than 1.00; and a ratio Re(550)/Re(650) is preferably 0.90 or more and less than 1.00, more preferably 0.95 or more and less than 1.00. When the retardation layer shows the positive wavelength dispersion characteristic or the flat wavelength dispersion characteristic, the ratio Re(450)/Re(550) is preferably from 1.00 to 1.15, more preferably from 1.00 to 1.07; and the ratio Re(550)/Re(650) is preferably from 1.00 to 1.10, more preferably from 1.00 to 1.05.

The thickness of the retardation layer may be set so that the desired in-plane retardation is obtained. The thickness of the retardation layer is preferably from 20 $\mu$m to 100 $\mu$m, more preferably from 30 $\mu$m to 70 $\mu$m.

The retardation layer may be formed of any appropriate resin film capable of achieving the above-mentioned characteristics. Examples of the resin for forming the retardation layer include polyarylate, polyamide, polyimide, polyester, polyaryl ether ketone, polyamide imide, polyester imide, polyvinyl alcohol, polyfumaric acid ester, polyethersulfone, polysulfone, a norbornene resin, a polycarbonate resin, a cellulose resin, and polyurethane. Those resins may be used alone or in combination thereof. The retardation layer may be obtained by stretching a film formed from any one of those resins under conditions in accordance with the kind of the resin and the above-mentioned desired characteristics.

F. Others

Detailed descriptions of the reflective layer and the light-absorbing layer are omitted because a configuration well-known in the art may be adopted for each of the layers.

G. Projection Screen

With regard to the projection screen optical laminate described in the section A to the section F, the optical laminate itself may be used as a proj ection screen. Alternatively, the proj ection screen optical laminate may be bonded to the projection surface side of a projection screen main body. In this case, the projection screen optical laminate is bonded to the projection surface side of the proj ection screen main body so that the retardation layer **30** (e.g., the embodiment of FIG. **1,** FIG. **2,** or FIG. **4**) or the high-haze layer **20** (e.g., the embodiment of FIG. **3** or FIG. **5**) may be on the viewer side of the screen. Thus, the proj ection screen may also be included in the embodiment of the present invention.

Examples

Now, the present invention is specifically described by way of Examples. However, the present invention is by no means limited to these Examples. Evaluation methods in Examples are as described below. In addition, in Examples, the terms "part (s) " and "%" are by weight unless otherwise stated.

(1) Haze

The same layers as high-haze layers used in Examples and layers corresponding to high-haze layers, which were used in Comparative Examples, were each formed on a transparent substrate to produce a laminate. The haze of the laminate was measured by a method specified in JIS K 7136 with a product available under the product name "NDH 5000" from Nippon Denshoku Industries Co., Ltd.

(2) Total Light Transmittance

Measurement was performed by a method specified in JIS K 7136 with a product available under the product name "NDH 5000" from Nippon Denshoku Industries Co., Ltd. in the same manner as in the haze measurement.

(3) Brightness

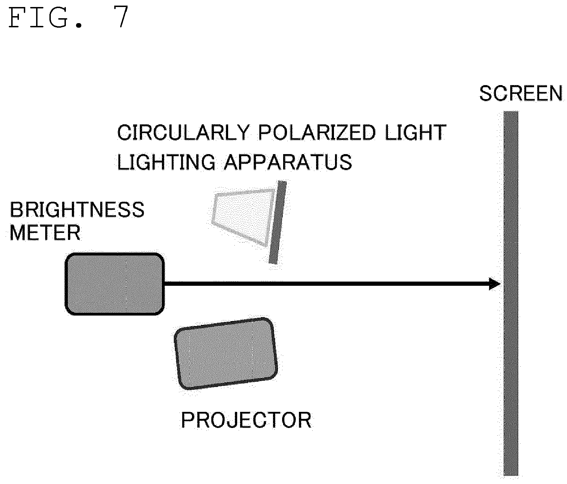

Measurement was performed with such a measuring system as illustrated in FIG. **7.** A specific procedure is as described below. Screens produced in Examples and Comparative Examples were used. "epico PJ214A" manufactured by Top One was used as a projector, and was adjusted so as to project an image in a projection size measuring 150 mm by 200 mm on each of the screens. A brightness meter ("LS-150" manufactured by Konica Minolta, Inc.: measurement angle: 1°, measurement area: φ14.4 mm) was placed at a point distant by about 1 m in a direction corresponding to a polar angle of the projection surface of the screen of 0° (normal direction of the screen) . Further, a circularly polarizing plate was bonded to the output portion of a LED base light ("LZD-92288NW" manufactured by Daiko Electric Co., Ltd.), which was a light source apparatus configured to output nonpolarized light, to produce a circularly polarized light lighting apparatus configured to output left-handed circularly polarized light. An image including a white display portion and a black display portion was projected on the screen with the projector while the screen was illuminated with the circularly polarized light lighting apparatus. The brightnesses (white brightness and black brightness) of the white display portion and black display portion of the projected image were each measured with the brightness meter.

(4) Contrast

Contrast was calculated from the white brightness and the black brightness obtained in the brightness measurement by using the following equation.

$$\text{Contrast=white brightness/black brightness}$$

(5) Viewing Angle

In the brightness-measuring system described in the section (3), the white brightness of the projected image was measured over the polar angle range of the projection surface of the screen of from +90° to -90° every 5°, and a range between the polar angles at which the brightness reduced to 50% with respect to the brightness of a front surface (corresponding to a polar angle of 0°) was adopted as a viewing angle (half-value angle).

(6) Appearance

The appearances of the screens having bonded thereto optical laminates obtained in Examples and Comparative Examples were visually evaluated.

<Example 1>

1-1. Polarizing Plate including Absorptive Polarizer

While an elongate roll of a polyvinyl alcohol (PVA) -based resin film having a thickness of 30 μm (manufactured by Kuraray Co., Ltd., product name: "PE3000") was uniaxially stretched in its lengthwise direction with a roll stretching machine so as to be 5.9 times as long as its original length in the lengthwise direction, the roll was simultaneously subjected to swelling treatment, dyeing treatment, cross-linking treatment, and washing treatment. Finally, the roll was subjected to drying treatment to produce a polarizer having a thickness of 12 μm (single layer transmittance: 45.1%) . A specific procedure was as described below. In the swelling treatment, the roll was stretched at a ratio of 2.2 times while being treated with pure water at 20°C. Next, in the dyeing treatment, the roll was stretched at a ratio of 1.4 times while being treated in an aqueous solution at 30°C having a weight ratio between iodine and potassium iodide of 1:7 in which an iodine concentration was adjusted so that the single layer transmittance of the polarizer to be obtained became 45.0%. Further, two-stage cross-linking treatment was adopted as the cross-linking treatment, and in first-stage cross-linking treatment, the roll was stretched at a ratio of 1.2 times while being treated in an aqueous solution at 40°C having dissolved therein boric acid and potassium iodide. The boric acid content of the aqueous solution of the first-stage cross-linking treatment was set to 5.0 wt%, and the potassium iodide content thereof was set to 3.0 wt%. In second-stage cross-linking treatment, the roll was stretched at a ratio of 1.6 times while being treated in an aqueous solution at 65°C having dissolved therein boric acid and potassium iodide. The boric acid content of the aqueous solution of the second-stage cross-linking treatment was set to 4.3 wt%, and the potassium iodide content thereof was set to 5.0 wt%. In addition, in the washing treatment, the roll was treated with an aqueous solution of potassium iodide at 20°C. The potassium iodide content of the aqueous solution of the washing treatment was set to 2.6 wt%. Finally, in the drying treatment, the roll was dried at 70°C for 5 minutes to provide the polarizer. A protective film (TAC film, thickness: 25 $\mu$m) was bonded to each of both sides of the resultant polarizer to provide a polarizing plate.

1-2. High-haze Layer

11 Parts of a 50% solution of pentaerythritol triacrylate (manufactured by Osaka Organic Chemical Industry Ltd., product name: "VISCOAT#300", refractive index: 1.52) serving as a precursor of a resin component in methyl ethyl ketone (MEK), 0.5 part of a photopolymerization initiator (manufactured by BASF Japan Ltd., product name: "IRGACURE 907"), 0.5 part of a leveling agent (manufactured by DIC Corporation, product name: "RS721"), and 15 parts of polymethylmethacrylate (PMMA) fine particles (manufactured by Sekisui Kasei Co., Ltd., product name: "XX-131AA", average particle diameter: 2.5 $\mu$m, refractive index: 1.49) serving as light-diffusible fine particles were added to 100 parts of a resin for hard coating (manufactured by JSR Corporation, product name: "OPSTAR KZ6661" (containing a mixture of MEK and MIBK)) containing 62% of zirconia nanoparticles (average primary particle diameter: 10 nm, average particle diameter: 60 nm, refractive index: 2.19) serving as ultrafine particle components. The mixture was subjected to dispersion treatment by being stirred with a stirring machine (manufactured by Asada Iron Works Co., Ltd., product name: "DESPA") for 30 minutes. Thus, an application liquid having uniformly dispersed therein the respective components was prepared. The solid content concentration of the application liquid was 55%. The application liquid was applied onto a substrate formed of a TAC film (manufactured by FUJIFILM Corporation, product name: "FUJITAC", thickness: 40 $\mu$m) with a bar coater, and was dried at 100°C for 1 minute, followed by irradiation with UV light having an integrated light quantity of 300 mJ. Thus, a laminate having the configuration "substrate/high-haze layer" was obtained. The haze and total light transmittance of the high-haze layer were adjusted by adjusting the thickness thereof. The haze and total light transmittance of the high-haze layer are shown in Table 1.

1-3. Retardation Layer

In a reaction vessel including a stirring apparatus, 27.0 kg of 2,2-bis(4-hydroxyphenyl)-4-methylpentane and 0.8 kg of tetrabutylammonium chloride were dissolved in 250 L of a solution of sodium hydroxide. A solution obtained by dissolving 13.5 kg of terephthaloyl chloride and 6.30 kg of isophthaloyl chloride in 300 L of toluene was added to the solution in one stroke while the latter solution was stirred, and the mixture was stirred at room temperature for 90 minutes to provide a polycondensation solution. After that, the polycondensation solution was separated by being left at rest, and a toluene solution containing polyarylate was separated therefrom. Next, the separated solution was washed with acetic acid water, and was further washed with ion-exchanged water. After that, the washed product was loaded into methanol to precipitate the polyarylate. The precipitated polyarylate was filtered, and was dried under reduced pressure to provide 34.1 kg of white polyarylate (yield: 92%).

The resultant polyarylate was vacuum-dried at 80°C for 5 hours, and was then formed into a polyarylate resin film having a thickness of 120 $\mu$m with a film-forming apparatus including a single-screw extruder (manufactured by Isuzu Kakoki Co., Ltd., screw diameter: 25 mm, cylinder set temperature: 220°C), a T-die (width: 200 mm, set temperature: 220°C), a chill roll (set temperature: from 120°C to 130°C), and a winding machine. The resultant resin film was subjected to longitudinal uniaxial stretching with a lab stretcher (manufactured by Bruckner Maschinenbau, KARO IV) at a stretching temperature of 138°C and a stretching ratio of 2.5 times to provide a retardation film. The resultant retardation film had a thickness of 50 $\mu$m, an in-plane retardation Re(550) of 147 nm, a ratio Re(450)/Re(550) of 0.98, and a ratio Re(550)/Re(650) of 0.99.

1-4. Production of Projection Screen Optical Laminate and Projection Screen

The polarizing plate, the laminate having the configuration "substrate (serving as a substrate layer)/high-haze layer", and the retardation film (serving as a retardation layer) obtained in the foregoing, and a typical reflective plate were bonded to each other to provide an optical laminate having the configuration of FIG. **1.** The resultant optical laminate was bonded to a commercial projection screen. The screen was subjected to the evaluations (3) to (6). The results are shown in Table 1.

<Example 2>

An optical laminate having the configuration of FIG. **1** was obtained in the same manner as in Example 1 except that the haze and total light transmittance of the high-haze layer were set as shown in Table 1 by changing the thickness thereof. A screen using the resultant optical laminate was subjected to the evaluations (3) to (6). The results are shown in Table 1.

<Example 3>

An optical laminate having the configuration of FIG. 1 was obtained in the same manner as in Example 1 except that the haze and total light transmittance of the high-haze layer were set as shown in Table 1 by changing the thickness thereof. A screen using the resultant optical laminate was subjected to the evaluations (3) to (6). The results are shown in Table 1.

<Example 4>

An optical laminate having the configuration of FIG. **2** was obtained in the same manner as in Example 1 except that the order in which the polarizing plate, the laminate having the configuration "substrate/high-haze layer", and the retardation film were laminated was changed. A screen using the resultant optical laminate was subjected to the evaluations (3) to (6). The results are shown in Table 1.

<Example 5>

An optical laminate having the configuration of FIG. **3** was obtained in the same manner as in Example 1 except that the order in which the polarizing plate, the laminate having the configuration "substrate/high-haze layer", and the retardation film were laminated was changed. A screen using the resultant optical laminate was subjected to the evaluations (3) to (6). The results are shown in Table 1.

<Example 6>

An optical laminate having the configuration of FIG. **4** was obtained in the same manner as in Example 1 except that: a reflective polarizer ("APF" manufactured by 3M Company) was used instead of the polarizing plate; and a light-absorbing film (black vinyl chloride sheet) was used instead of the reflective plate. A screen using the resultant optical laminate was subjected to the evaluations (3) to (6). The results are shown in Table 1.

<Example 7>

An optical laminate having the configuration of FIG. **5** was obtained in the same manner as in Example 6 except that the order in which the reflective polarizer, the laminate having the configuration"substrate/high-haze layer", and the retardation film were laminated was changed. A screen using the resultant optical laminate was subjected to the evaluations (3) to (6). The results are shown in Table 1.

<Comparative Example 1>

An optical laminate having a configuration corresponding to FIG. **1** was obtained in the same manner as in Example 1 except that the laminate having the configuration "substrate/high-haze layer" was not used. A screen using the resultant optical laminate was subjected to the evaluations (3) to (6). The results are shown in Table 1.

<Comparative Example 2>

An optical laminate having a configuration corresponding to FIG. **1** was obtained in the same manner as in Example 1 except that a commercial screen film for a projector ("MRPS-W100A" manufactured by Diamic Co., Ltd.) was used instead of the laminate having the configuration "substrate/high-haze layer". A screen using the resultant optical laminate was subjected to the evaluations (3) to (6). The results are shown in Table 1.

<Comparative Example 3>

An optical laminate having a configuration corresponding to FIG. **1** was obtained in the same manner as in Example 1 except that a commercial screen film for a projector ("RSF-115n" manufactured by 1st Screen Co., Ltd.) was used instead of the laminate having the configuration "substrate/high-haze layer". A screen using the resultant optical laminate was subjected to the evaluations (3) to (6). The results are shown in Table 1.

<Comparative Example 4>

An optical laminate having a configuration corresponding to FIG. **1** was obtained in the same manner as in Example 1 except that a commercial screen material for a projector ("WraithVeil" manufactured by Elite Screens Inc.) was used instead of the laminate having the configuration "substrate/high-haze layer". A screen using the resultant optical laminate was subjected to the evaluations (3) to (6). The results are shown in Table 1.

<Comparative Example 5>

An optical laminate having a configuration corresponding to FIG. **1** was obtained in the same manner as in Example 1 except that a commercial screen film for a projector ("MRPS-T100A" manufactured by Diamic Co., Ltd.) was used instead of the laminate having the configuration "substrate/high-haze layer". A screen using the resultant optical laminate was subjected to the evaluations (3) to (6). The results are shown in Table 1.

<Comparative Example 6>

An optical laminate having a configuration corresponding to FIG. **1** was obtained in the same manner as in Example 1 except that an acrylic film with a light-diffusing pressure-sensitive adhesive layer was used instead of the laminate having the configuration "substrate/high-haze layer". The acrylic film with a light-diffusing pressure-sensitive adhesive layer was produced as described below.

74.9 Parts of butyl acrylate, 20 parts of benzyl acrylate, 5 parts of acrylic acid, 0.1 part of 4-hydroxybutyl acrylate, and 0.1 part of 2,2'-azobisisobutyronitrile serving as a polymerization initiator were loaded into a four-necked flask including a stirring blade, a temperature gauge, a nitrogen gas-introducing tube, and a condenser together with 100 parts of ethyl acetate (monomer concentration: 50%), and a nitrogen gas was introduced to purge the inside of the flask with nitrogen while the mixture was gently stirred. After that, a polymerization reaction was performed for 8 hours while the temperature of the liquid in the flask was kept at about 55°C. Thus, a solution of an acrylic polymer having a weight-average molecular weight (Mw) of 2, 040, 000 and a ratio Mw/Mn of 3.2 was prepared. 100 Parts of the solid content of the resultant acrylic polymer solution was compounded with 0.45 part of an isocyanate cross-linking agent (CORONATE L manufactured by Nippon Polyurethane Industry Co., Ltd., tolylene diisocyanate adduct of trimethylolpropane), 0.1 part of benzoyl peroxide (manufactured by Nippon Oil & Fats Co., Ltd., NYPER BMT), 0.1 part of a silane coupling agent (KBM-403 manufactured by Shin-Etsu Chemical Co., Ltd.), and 9 parts of silicone resin fine particles (TOSPEARL 130 manufactured by Momentive Performance Materials Japan LLC, volume-average particle diameter: 3 $\mu$m) serving as light-diffusible fine particles to prepare an application liquid of a light-diffusing pressure-sensitive adhesive (solid content: 11%). The application liquid was applied to an acrylic film (thickness: 40 $\mu$m, in-plane retardation Re(550)=0 nm) and dried to provide the acrylic film with a light-diffusing pressure-sensitive adhesive layer. The thickness of the light-diffusing pressure-sensitive adhesive layer was adjusted so that its haze became 52.7%.

A screen using the resultant optical laminate was subjected to the evaluations (3) to (6). The results are shown in Table 1.

<Comparative Example 7>

An optical laminate having a configuration corresponding to FIG. **1** was obtained in the same manner as in Comparative Example 6 except that the thickness of the light-diffusing pressure-sensitive adhesive layer was changed so that its haze became 73.8%. A screen using the resultant optical laminate was subjected to the evaluations (3) to (6). The results are shown in Table 1.

<Comparative Example 8>

An optical laminate having a configuration corresponding to FIG. **4** was obtained in the same manner as in Example 6 except that a commercial screen film for a projector ("MRPS-W100A" manufactured by Diamic Co., Ltd.) was used instead of the laminate having the configuration "substrate/high-haze layer". A screen using the resultant optical laminate was subjected to the evaluations (3) to (6). The results are shown in Table 1.

Table 1

| | High-haze layer | Haze (%) | Total light transmittance (%) | Polarizer | Configuration | Black brightness (cd/m²) | White brightness (cd/m²) | Contrast | Viewing angle (°) | Appearance |
|---|---|---|---|---|---|---|---|---|---|---|
| Example 1 | Present | 98.3 | 89.7 | Absorptive | FIG. 1 | 12.6 | 257.2 | 20.4 | 100 | Pale gray |
| Example 2 | Present | 96.7 | 91.2 | Absorptive | FIG. 1 | 12.3 | 270.5 | 22.0 | 70 | Pale gray |
| Example 3 | Present | 99.1 | 85.1 | Absorptive | FIG. 1 | 12.5 | 244.8 | 19.6 | 120 | Pale gray |
| Example 4 | Present | 98.3 | 89.7 | Absorptive | FIG. 2 | 21.8 | 250.2 | 11.5 | 100 | Pale gray |
| Example 5 | Present | 98.3 | 89.7 | Absorptive | FIG. 3 | 24.5 | 252.6 | 10.3 | 100 | Pale gray |
| Example 6 | Present | 98.3 | 89.7 | Reflective | FIG. 4 | 22.8 | 344.7 | 15.1 | 100 | Whitish |
| Example 7 | Present | 98.3 | 89.7 | Reflective | FIG. 5 | 24.7 | 347.9 | 14.1 | 100 | Whitish |
| Comparative Example 1 | Absent | - | - | Absorptive | Corresponding to FIG. 1 | 15.6 | 321.8 | 20.6 | 20 | Blackish |
| Comparative Example 2 | Commercial product | 99.3 | 51.5 | Absorptive | Corresponding to FIG. 1 | 12.9 | 129.1 | 10.0 | 180 | Pale gray |
| Comparative Example 3 | Commercial product | 98.9 | 68.8 | Absorptive | Corresponding to FIG. 1 | 12.5 | 148.3 | 11.9 | 120 | Whitish |
| Comparative Example 4 | Commercial product | 94.3 | 38.0 | Absorptive | Corresponding to FIG. 1 | 12.6 | 82.2 | 6.5 | 180 | Gray |
| Comparative Example 5 | Commercial product | 23.2 | 86.0 | Absorptive | Corresponding to FIG. 1 | 13.0 | 224.1 | 17.2 | 30 | Blackish |
| Comparative Example 6 | Light-diffusing pressure-sensitive adhesive | 52.7 | 90.7 | Absorptive | Corresponding to FIG. 1 | 13.1 | 307.6 | 23.5 | 30 | Blackish |
| Comparative Example 7 | Light-diffusing pressure-sensitive adhesive | 73.8 | 91.1 | Absorptive | Corresponding to FIG. 1 | 12.7 | 297.5 | 23.4 | 40 | Blackish |
| Comparative Example 8 | Commercial product | 99.3 | 51.5 | Reflective | Corresponding to FIG. 4 | 36.4 | 186.5 | 5.1 | 180 | Whitish |

As is apparent from Table 1, each of the optical laminates of Examples of the present invention can achieve a screen that achieves a projected image excellent in white brightness, contrast, and viewing angle, and is excellent in appearance.

Industrial Applicability

The expansion of the applications of the optical laminate according to the embodiment of the present invention has been expected because the laminate enables clear display of an image projected by a projector even under a bright environment, and can maintain an interior appearance.

Reference Signs List

| 10A | absorptive polarizer |
|-----|----------------------|
| 10B | reflective polarizer |
| 20  | high-haze layer |
| 30  | retardation layer |
| 40  | substrate layer |
| 50  | reflective layer |
| 60  | light-absorbing layer |
| 100 | projection screen optical laminate |
| 101 | projection screen optical laminate |
| 102 | projection screen optical laminate |
| 103 | projection screen optical laminate |
| 104 | projection screen optical laminate |

**Claims**

1. A projection screen optical laminate, comprising:

   a polarizer;
   a high-haze layer; and
   a retardation layer,
   wherein the high-haze layer has a haze of 90% or more, and a total light transmittance of 80% or more, and
   wherein the retardation layer has an in-plane retardation Re(550) of from 100 nm to 200 nm.

2. The projection screen optical laminate according to claim 1, wherein the polarizer is an absorptive polarizer.

3. The projection screen optical laminate according to claim 2, wherein the projection screen optical laminate comprises the high-haze layer, the absorptive polarizer, and the retardation layer in the stated order toward a viewer side thereof.

4. The projection screen optical laminate according to claim 3, further comprising a reflective layer on a side of the high-haze layer opposite to the absorptive polarizer.

5. The projection screen optical laminate according to claim 1, wherein the polarizer is a reflective polarizer.

6. The projection screen optical laminate according to claim 5, wherein the projection screen optical laminate comprises the reflective polarizer, the high-haze layer, and the retardation layer in the stated order toward a viewer side thereof.

7. The projection screen optical laminate according to claim 6, further comprising a light-absorbing layer on a side of the reflective polarizer opposite to the high-haze layer.

8. The projection screen optical laminate according to any one of claims 1 to 7, wherein the high-haze layer has a matrix and light-diffusible fine particles dispersed in the matrix, and has a refractive index modulation region in which a refractive index changes in a substantially continuous manner, the region being formed at an interface between the matrix and the light-diffusible fine particles, or in a vicinity thereof.

9. The projection screen optical laminate according to claim 8, wherein the matrix contains a resin component and ultrafine particle components, and the refractive index modulation region is formed by a substantial gradient of a dispersion concentration of the ultrafine particle components in the matrix.

10. The projection screen optical laminate according to any one of claims 1 to 9, wherein the projection screen optical laminate is used as a projection screen.

11. A projection screen, comprising:

    a screen main body; and
    the projection screen optical laminate of any one of claims 1 to 9 bonded to a projection surface side of the screen main body.

FIG. 1

100

| | |
|---|---|
| | 30 |
| | 10A |
| | 20 |
| | 40 |
| | 50 |

FIG. 2

101

| | |
|---|---|
| | 30 |
| | 20 |
| | 40 |
| | 10A |
| | 50 |

FIG. 3

102

| 20 |
|---|
| 40 |
| 30 |
| 10A |
| 50 |

FIG. 4

103

| 30 |
|---|
| 20 |
| 40 |
| 10R |
| 60 |

FIG. 5

104

20
40
30
10R
60

FIG. 6

REFLECTION AXIS

TRANSMISSION AXIS

STRETCHING DIRECTION

A
B
A
B
A
B

A
B
R

Z
Y
X

FIG. 7

SCREEN

CIRCULARLY POLARIZED LIGHT
LIGHTING APPARATUS

BRIGHTNESS
METER

PROJECTOR

## INTERNATIONAL SEARCH REPORT

| | International application No. |
|---|---|
| | PCT/JP2019/014787 |

A. CLASSIFICATION OF SUBJECT MATTER
Int.Cl. G02B5/30(2006.01)i, G02B5/02(2006.01)i, G03B21/60(2014.01)i

According to International Patent Classification (IPC) or to both national classification and IPC

B. FIELDS SEARCHED

Minimum documentation searched (classification system followed by classification symbols)
Int.Cl. G02B5/30, G02B5/02, G03B21/60

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-15897 A (ZEON CORPORATION) 19 January 2017, paragraphs [0005], [0015]-[0040], [0105], [0106], fig. 1, 2<br>(Family: none) | 1, 5, 10–11<br>1–11 |
| Y | JP 2003-287818 A (SONY CORPORATION) 10 October 2003, paragraphs [0010], [0119]-[0125], [0155]-[0157], fig. 9, 10, 13<br>(Family: none) | 1–4, 8–11 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18.06.2019 | 25.06.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2019/014787

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-540445 A (3M INNOVATIVE PROPERTIES COMPANY) 26 November 2002, paragraphs [0004], [0045]-[0070], fig. 4, 4A<br>& US 6381068 B1, column 1, lines 35-48, column 9, line 18 to column 13, line 31, fig. 4, 4A & WO 2000/057214 A1 & EP 1166158 A1 & AU 4700099 A & KR 10-2002-0001782 A & CN 1350648 A & MX PA01009398 A | 1, 5-11 |
| Y | JP 2012-88692 A (NITTO DENKO CORPORATION) 10 May 2012, paragraphs [0013]-[0051], fig. 1A, 1B-4<br>& US 2013/0265506 A1, paragraphs [0068]-[0107], fig. 1A, 1B-4 & WO 2012/036270 A1 & EP 2618183 A1 & TW 201222018 A & CN 103109213 A & KR 10-2013-0041336 A | 8-9 |
| A | JP 2005-164708 A (DAI NIPPON PRINTING CO., LTD.) 23 June 2005, entire text, all drawings (Family: none) | 1-11 |
| A | US 2016/0088272 A1 (BARCO, INC.) 24 March 2016, entire text, all drawings<br>& WO 2016/014560 A2 & EP 3172621 A2 & CA 2955942 A1 & CN 107077059 A & KR 10-2017-0089832 A | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5134214 A
- JP 6138429 A
- JP 2004198649 A
- JP 2009223012 A
- JP 2017015897 A
- JP 2012073580 A

- JP 9507308 A
- JP 2012088692 A
- JP 2012083741 A
- JP 2012083742 A
- JP 2012083744 A